# DEMANDE DE BREVET EUROPEEN

(11) **EP 0 591 021 A1**
(43) Date de publication de la demande: **06.04.1994**
(21) Numéro de dépôt: 93402225.2
(22) Date de dépôt: 14.09.1993
(51) Int. Cl.: H04B 11/00, B60R 16/02

(54) **Dispositif de transmission d'informations entre différents organes fonctionnels d'un véhicule automobile**

(30) Priorité: 29.09.1992 FR 9211612
(71) Demandeur: AUTOMOBILES PEUGEOT, F-75116 Paris (FR); AUTOMOBILES CITROEN, F-92200 Neuilly sur Seine (FR)
(72) Inventeur: Goly, Fabrice, F-95610 Eragny sur Oise (FR)
(74) Mandataire: Pinchon, Odile

(57) **Abrégé**

Ce dispositif, dans lequel chaque organe (1,2) comporte des moyens d'émission et/ou de réception d'un signal d'informations, associés à un support de transmis- sion d'informations entre les organes, est caractérisé en ce que les moyens d'émission et de réception d'informations comprennent des moyens d'émission et de réception d'un signal vibratoire ultrasonore d'informations.

Avantageusement, le support de transmission d'informations est formé par la caisse du véhicule.

## Description

La présente invention concerne un dispositif de transmission d'informations entre différents organes fonctionnels d'un véhicule automobile.

On connaît déjà dans l'état de la technique, un certain nombre de dispositifs de transmission de ce type.

Ces dispositifs sont par exemple utilisés pour assurer la commande d'accessoires de ces véhicules, ce qui nécessite un câblage important.

En effet, cette commande impose l'utilisation d'au moins un fil d'alimentation de chaque accessoire et de fils de commande dont le nombre dépend du mode de transmission des informations de commande et de la complexité de chaque accessoire.

Pour réduire le nombre de fils utilisés, on a proposé dans l'état de la technique d'utiliser des techniques de transmission à multiplexage d'informations.

Dans ce cas, il est toujours nécessaire de prévoir pour chaque accessoire, au moins un fil d'alimentation, un fil de transfert d'informations de commande, un fil de retour d'informations de commande et un fil de masse, qui est rendu nécessaire par la présence de très faibles courants dans les fils de transfert et de retour d'informations.

On conçoit que ces dispositifs de transmission d'informations présentent toujours l'inconvénient d'utiliser un nombre de fils plus ou moins important, ce qui augmente leur prix de revient, en raison des coûts d'intégration de ces fils dans les véhicules.

Le but de l'invention est donc de résoudre ces problèmes.

A cet effet, l'invention a pour objet un dispositif de transmission d'informations entre différents organes fonctionnels d'un véhicule automobile, dans lequel chaque organe comporte des moyens d'émission et/ou de réception d'un signal d'informations, associés à un support de transmission d'informations entre les organes, caractérisé en ce que les moyens d'émission et de réception d'informations comprennent des moyens d'émission et de réception d'un signal vibratoire ultrasonore d'informations.

Avantageusement, le support d'informations est formé par la caisse du véhicule.

L'invention sera mieux comprise à l'aide de la description qui va suivre, donnée uniquement à titre d'exemple et faite en se référant aux dessins annexés, sur lesquels :
- la Fig.1 représente un schéma synoptique d'un exemple d'implantation d'un dispositif de transmission selon l'invention dans un véhicule automobile;
- la Fig.2 représente un schéma synoptique d'un exemple de réalisation de moyens d'émission d'informations entrant dans la constitution d'un dispositif selon l'invention;
- la Fig.3 représente un schéma synoptique d'un exemple de réalisation de moyens de réception d'informations entrant dans la constitution d'un dispositif selon l'invention;
- la Fig.4 représente un exemple d'un signal vibratoire ultrasonore d'informations utilisé dans un dispositif de transmission selon l'invention; et
- la Fig.5 illustre un autre exemple de fonctionnement d'un dispositif de transmission selon l'invention.

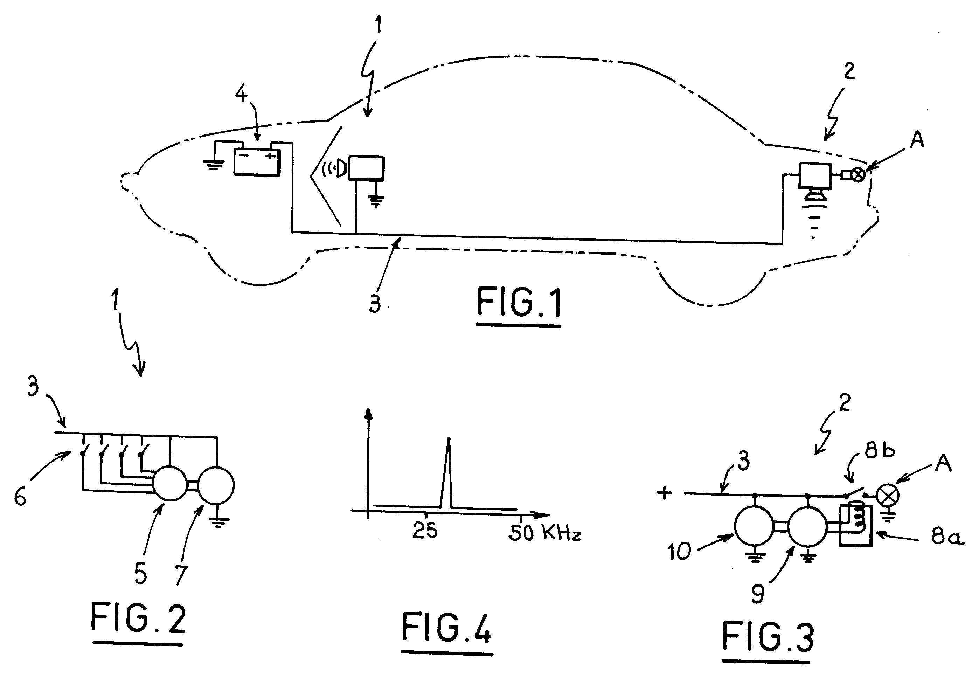

Ainsi qu'on peut le voir sur la Fig.1, un dispositif de transmission selon l'invention est adapté pour permettre une transmission d'informations entre différents organes fonctionnels d'un véhicule automobile dont, deux, désignés par les références générales 1 et 2, sont représentés sur cette figure.

L'un de ces organes, désigné par la référence 1 peut par exemple être disposé dans la partie avant du véhicule, tandis que l'autre, désigné par la référence 2, peut être disposé dans la partie arrière de celui-ci.

Ces différents organes sont reliés de manière connue en soi par un fil d'alimentation 3, à une batterie 4 d'alimentation en énergie du véhicule.

Chacun de ces organes comporte des moyens d'émission et/ou de réception d'un signal d'informations associés à un support de transmission des informations entre les organes.

Alors que dans l'état de la technique, les moyens d'émission et de réception étaient constitués par des moyens de génération et de détection de signaux électriques d'informations sur un ou plusieurs fils conducteurs, les moyens d'émission et de réception d'informations du dispositif selon l'invention comportent des moyens d'émission et de réception d'un signal vibratoire ultrasonore d'informations, qui est transmis entre les différents organes fonctionnels du véhicule par exemple par la caisse de celui-ci.

Dans la présente demande, la caisse du véhicule est considérée comme comprenant tous les éléments solides de la structure de ce véhicule et tous les organes mobiles reliés à celle-ci, tels que par exemple les ouvrants et autres de ce véhicule, de même que par exemple des éléments remorqués par ce véhicule et reliés à celui-ci, par exemple par un ensemble d'attelage.

Un schéma synoptique d'un mode de réalisation de moyens d'émission est représenté sur la Fig.2, sur laquelle on peut constater que ces moyens d'émission sont reliés au fil d'alimentation 3 et comprennent par exemple un générateur de fréquence désigné par la référence 5, dont le fonctionnement est contrôlé par un ou plusieurs organes de commande 6 actionnables par exemple par un utilisateur et dont la sortie est reliée à un émetteur 7 associé à une partie de la caisse du véhicule pour assurer l'émission d'un signal vibratoire ultrasonore d'informations correspondant dans celle-ci.

Un exemple de réalisation de moyens de réception correspondants est représenté sur la Fig.3.

Dans cet exemple de réalisation, les moyens de réception sont reliés au fil d'alimentation 3 et contrôlent le fonctionnement d'un relais d'alimentation par exemple d'une ampoule électrique A.

Ce relais comporte une bobine 8a et un interrupteur 8b. L'interrupteur 8b est interposé entre l'ampoule électrique A et le fil d'alimentation 3.

L'excitation de la bobine 8a de ce relais est contrôlée par des moyens d'analyse 9 connectés à la sortie d'un capteur 10.

Ce capteur 10 est également associé à la caisse du véhicule pour détecter tout signal vibratoire ultrasonore d'informations transmis dans celle-ci.

Les moyens d'analyse sont quant à eux adaptés pour reconnaître dans le signal de sortie du capteur, représentatif du signal vibratoire ultrasonore transmis dans la caisse du véhicule, par exemple une composante de fréquence déterminée associée à l'organe 2 et permettant de contrôler son fonctionnement par exemple en pilotant le relais.

A titre d'exemple, on décrira ci-dessous le contrôle de l'allumage de feux anti-brouillard d'un véhicule automobile.

La commande de cet allumage est assurée par l'utilisateur par l'intermédiaire par exemple de l'un des organes de commande désignés par la référence 6 sur la Fig.2 et implanté sur le tableau de bord du véhicule. La fermeture de cet organe provoque la génération par le générateur 5 d'un signal de fréquence déterminée qui est transmis via l'émetteur 7 dans la caisse du véhicule automobile, sous la forme d'un signal vibratoire ultrasonore d'informations comportant une composante à la fréquence déterminée.

Ce signal se répercute dans toute la caisse du véhicule et est capté par le capteur 10 de l'organe 2.

Les moyens d'analyse 9 connectés à la sortie de celui-ci reconnaissent alors dans le signal reçu, la composante de fréquence déterminée pour contrôler l'alimentation du relais et piloter l'allumage des feux anti-brouillard.

Un exemple d'un tel signal vibratoire ultrasonore d'informations est représenté sur la Fig.4.

On voit que celui-ci présente une composante de fréquence à environ 30 KHz.

Ce signal vibratoire peut par exemple s'étendre dans une plage allant de 30 KHz à plus de 100 KHz.

Il a en effet été constaté lors d'essais que dans cette plage de fréquences, il n'y a pratiquement pas de signaux parasites, ce qui permet d'obtenir un rapport signal sur bruit relativement important.

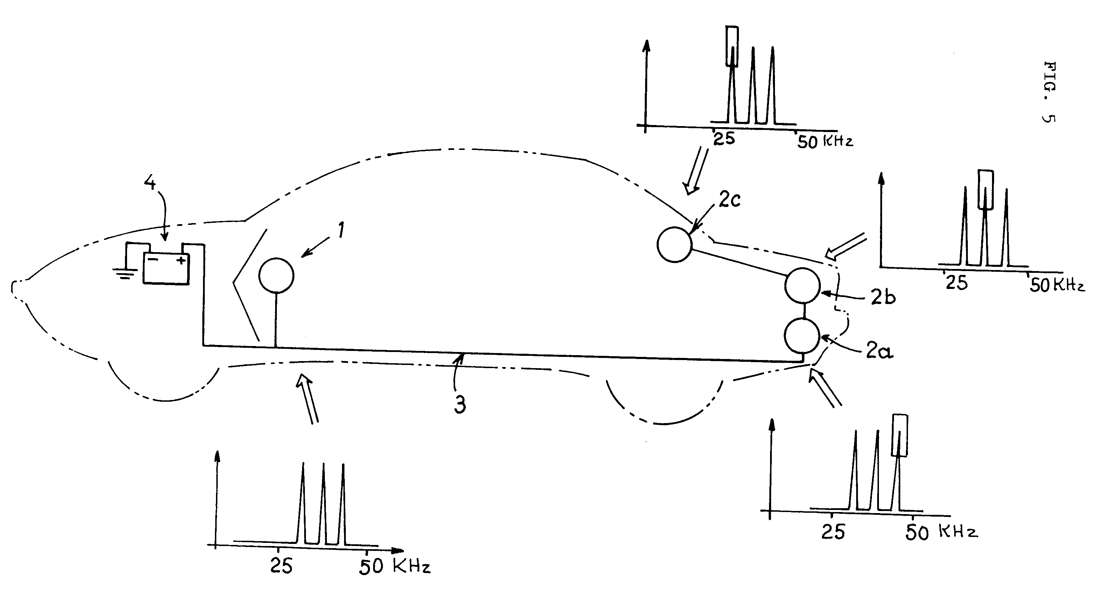

Bien entendu, et comme on peut le voir sur la Fig.5, plusieurs organes par exemple 2a, 2b,2c peuvent être pilotés en utilisant un signal comportant des composantes de fréquences différentes.

Les moyens d'émission peuvent en effet être commandés pour émettre un tel signal.

Chaque organe 2a, 2b ou 2c présente alors une structure analogue à celle de l'organe 2 représenté sur la Fig.3, mais dont les moyens d'analyse 9 sont calés sur des composantes de fréquences différentes, ce qui permet de réaliser une discrimination entre ces composantes et de ne commander le fonctionnement de chaque organe qu'en cas de présence de la composante de fréquence associée à cet organe.

Dans les différents exemples de réalisation qui viennent d'être décrits, les informations à transmettre sont du type tout ou rien et le contrôle du fonctionnement des organes correspondants se fait par détection de la présence ou de l'absence d'une composante de fréquence spécifique dans le signal vibratoire ultrasonore.

Bien entendu, le dispositif selon l'invention peut également être utilisé lorsque les informations à transmettre sont évolutives dans le temps.

Il est en effet possible de contrôler de façon évolutive le fonctionnement du générateur de fréquence 5 pour que celui-ci délivre une fréquence de sortie variant de façon évolutive, par exemple dans une plage de fréquences déterminée, en fonction de l'information à transmettre, de manière que le signal vibratoire ultrasonore d'informations engendré dans la caisse du véhicule par l'émetteur, comporte une composante de fréquence évolutive dans une plage déterminée en fonction de l'évolution de l'information correspondante.

Les moyens d'analyse associés à l'organe destiné à recevoir ces informations scrutent alors cette plage de fréquences déterminée, déterminent dans cette plage, la fréquence de la composante présente et convertissent cette fréquence en informations utilisables par le reste des circuits de cet organe.

C'est ainsi par exemple qu'il est possible d'assurer la transmission d'informations relatives à la tension de la batterie du véhicule, etc..

On conçoit alors qu'en utilisant un dispositif selon l'invention, il n'est plus nécessaire de prévoir de fils de transmission d'informations par exemple de commande entre les différents organes, dans la mesure où la transmission des informations est assurée pour la caisse du véhicule, les différents organes fonctionnels de celui-ci, étant associés à celle-ci pour émettre ou capter signaux vibratoires ultrasonores dans cette caisse.

## Revendications

1. Dispositif de transmission d'informations entre différents organes fonctionnels d'un véhicule automobile, dans lequel chaque organe (1,2) comporte des moyens (5,6,7,9,10) d'émission et/ou de réception d'un signal d'informations, associés à un support de transmission d'informations entre les organes, caractérisé en ce que les moyens d'émission et de réception d'informations comprennent des moyens d'émission et de réception d'un signal vibratoire ultrasonore d'informations.

2. Dispositif selon la revendication 1, caractérisé en ce que le support d'informations est formé par la caisse du véhicule.

3. Dispositif selon la revendication 1 ou 2, dans lequel les informations à transmettre sont du type tout ou rien, caractérisé en ce que les moyens d'émission (5,6,7) sont adaptés pour émettre ou non une composante de fréquence déterminée en fonction des informations.

4. Dispositif selon l'une quelconque des revendications précédentes, dans lequel les informations à transmettre sont évolutives dans le temps, caractérisé en ce que les moyens d'émission sont adaptés pour émettre une composante de fréquence évolutive en fonction de ces informations.

5. Dispositif selon l'une quelconque des revendications précédentes, caractérisé en ce que différentes fréquences et/ou plages de fréquences déterminées sont affectées aux transmissions d'informations entre les différents organes.

6. Dispositif selon l'une quelconque des revendications précédentes, caractérisé en ce que les moyens d'émission comprennent un générateur de fréquence (5) dont le fonctionnement est contrôlé par au moins un organe de commande (6) et dont la sortie est reliée à un émetteur de signal vibratoire ultrasonore (7) associé au support de transmission d'informations.

7. Dispositif selon l'une quelconque des revendications précédentes, caractérisé en ce que les moyens de réception comprennent un capteur (10) de signal vibratoire ultrasonore, associé au support de transmission d'informations et dont la sortie est reliée à des moyens d'analyse (9) délivrant un signal d'informations au reste des circuits de l'organe correspondant.
